# EUROPEAN PATENT SPECIFICATION

(11) **EP 2 448 427 B1**
(45) Date of publication and mention of the grant of the patent: **29.05.2013**
(21) Application number: 10728604.9
(22) Date of filing: 01.07.2010
(51) Int. Cl.: A23G 4/06, A23G 4/20, A23G 4/18, A23L 1/00, A23L 1/22

(54) **A PARTICULATE FLAVOR DELIVERY SYSTEM, A METHOD OF MAKING IT AND USE THEREOF**
PARTIKELFÖRMIGES AROMAFREISETZUNGSSYSTEM SOWIE VERFAHREN ZU SEINER HERSTELLUNG UND VERWENDUNG
SYSTÈME DE DISTRIBUTION D AROME PARTICULAIRE, ET SON PROCÉDÉ DE PRODUCTION ET D UTILISATION

(30) Priority: 03.07.2009 EP 09008749
(43) Date of publication of application: 09.05.2012
(73) Proprietor: Cargill, Incorporated, Wayzata, MN 55391 (US)
(72) Inventor: AUBANEL, Michel, F-06130 Grasse (FR); MCCRAE, Catharina Hillagonda, B-3060 Bertem (BE); ROBERT, Claude, F-91700 Sainte Geneviève des Bois (FR); VEELAERT, Sarah, B-1980 Eppegem (BE); WALLECAN, Joël, René, Pierre, B-1800 Vilvoorde (BE)
(74) Representative: Haegeman, Christophe Dominique René
(86) International application number: PCT/EP2010/003866
(87) International publication number: WO 2011/000524

(56) References cited:
- EP-A2- 1 123 660
- WO-A1-00/21504
- US-A- 5 009 900
- US-B1- 7 488 503

## Description

### Field of the Invention

The present invention relates to a particulate flavour delivery system, a method of making it, and use thereof. The present invention also relates to products comprising the particulate flavour delivery system.

### Background of the Invention

The prior art is replete with controlled delivery systems for the delivery of flavours, perfume and fragrances, drugs, and other active ingredients for cleaning, health and skin, and the like.

Delivery systems for the delivery of flavours essentially exist in 2 forms. One form is a suspension which, depending on the level of flavours, can be pasty or liquid. Although these suspensions are often useful, they may have some disadvantages such as ease-of-handling, limited number of applications, limited shelf life and micro-susceptibility.

Another form is a particulate delivery system. Such a system is sometimes preferred because it's easier to handle. Generally two techniques exist for making such particulate delivery systems.

One technique is the adsorption of a solid flavour on a carrier. This technique is often referred to as plating. Plating is the old flavour terminology for the adsorption of a liquid flavour on a fine powder and is the oldest method to transform a liquid flavour into powder. Salt, sugar, maltodextrins and starches are commonly used as carriers. The process is a physical action of solid-liquid intersurface tension and surface adsorption. However, plating has a number of disadvantages. Firstly, the loading capacity of the flavour is low (often not more than 5%) which requires a high dosage of the delivery system into the application in which the delivery system is to be used. Secondly, the flavour is adsorbed on the outside surface of the carrier, which means that the flavour is not protected and can be exposed to air or other actives which may react with the flavour. This results in the loss of volatile flavour components and flavour oxidation and/or deterioration. Hence, such delivery systems have a short shelf-life.

Another technique is spray drying. Spray drying is one of the most popular methods to prepare powder flavour products from liquid flavours and to encapsulate flavours for protection and sustained release purposes. Besides a good selection of the carrier matrix it involves emulsification of the flavour in the matrix and subsequent atomisation of the emulsion in the drying chamber to evaporate the water. With those parameters one can design a wide range of powder flavours with different properties as to stability, dispersibility and the like. Flavour emulsions for spray-drying are commonly prepared with gum arabic or modified starch as an emulsifier, and with maltodextrin or glucose syrup solids as a matrix. While spray-dried flavour delivery systems generally have a sufficient shelf-life (6 to 12 months), they also have a number of disadvantages. Typically the spray drying process is an expensive and complex process, which involves the use of expensive emulsifiers. Generally, spray-dried flavour delivery systems have a maximum loading capacity of about 20%. And spray-dried flavour delivery systems also suffer from loss of flavour volatiles during spray-drying, and the flavour profile is modified due to the heat treatment during spray drying.

However, such particulate delivery system typically has some constraints with respect to the loading capacity of the flavours. If the level of flavour is too high, they may agglomerate and become sticky.

Among the possible carriers that have already been described in the prior art, starch is one possible carrier which is interesting due to its natural character and compatibility with food products. For example, Jinghan ZHAO et al, "Cavities in porous corn starch provides a large storage space", Cereal Chem. 73(3):379-380 describes the mechanism of peppermint oil absorption into porous starch.

It is an object of the present invention to provide a controlled delivery system which has improved flavour delivery. Improved flavour delivery includes for example higher flavour intensity, reduced flavour oxidation, maintenance of the flavour profile, reduced loss of volatiles and flavour notes, prolonged release of the flavour and/or reduced or elimination of formation of off-flavours.

It is a further object of the present invention to provide a controlled delivery system with a high loading capacity while still being easy to handle.

It is yet a further object of the present invention to provide a controlled delivery system which is easy, fast and low cost to produce.

It is yet another object of the present invention to provide a controlled delivery system which has a long shelf life.

### Summary of the Invention

According to a first aspect, the present invention relates to a particulate flavour delivery system comprising a starch carrier and a blend of a first flavouring agent and a plasticizer, said first flavouring agent being non-liquid at a temperature of 20°C to 25°C, and said plasticizer being liquid at a temperature of 20°C to 25°C, said blend being encapsulated in said starch carrier, characterized in that said encapsulated blend comprises at least 40% by weight of said blend of a portion which is solid or semi-solid, said portion having a melting point or a glass transition temperature of from 25°C to 250°C.

According to a second aspect, the present invention relates to a method of making a particulate flavour delivery system comprising the steps of:
a. making a blend by mixing a first flavouring agent which is non-liquid at 20°C to 25°C and a plasticizer at a temperature from 25°C to 65°C; and
b. mixing said blend with a starch carrier

According to a third aspect, the present invention relates to the use of said particulate flavour delivery system in food and foodstuff products including bakery products, feed, chewing gum, personal care products, pharmaceutical products or compressed tablets.

According to a fourth aspect, the present invention relates to a chewing gum comprising said particulate flavour delivery system wherein said first flavouring agent comprises menthol and wherein said plasticizer comprises mint oil.

According to a fifth aspect, the present invention relates to a bakery product comprising said particulate flavour delivery system wherein said particulate flavour delivery system is present at a level from 0.05% to 5% by weight of said bakery product.

According to a sixth aspect, the present invention relates to a tablet comprising said particulate flavour delivery system, wherein said particulate flavour delivery system is present at a level from 0.5% to 5% by weight of said tablet.

The present invention will now be further described by reference to the following detailed description of the present invention and the examples.

### Detailed Description

The present invention relates to a particulate flavour delivery system. The particulate flavour delivery system comprises a starch carrier, preferably a solid starch carrier, and a blend of a first flavouring agent and a plasticizer, said blend being encapsulated in said starch carrier. As used herein, the term "encapsulated in" means that the blend is absorbed or entrapped inside the internal structure of the starch carrier. The particulate flavour delivery system is preferably substantially dry. More preferably, it is a dry particulate flavour delivery system such that it can behave as a free flowing powder which improves e.g. the handling of it.

### Starch Carrier

Starch is a polysaccharide that is produced in the form of granules in most plant cells. Such starch granules consist of highly ordered crystalline regions and less organized amorphous regions. When present in this granular state, the starch is referred to as "native starch".

Suitable starch containing kernels refer to corn, pea, potato, sweet potato, sorghum, banana, barley, wheat, rice, sago, amaranth, tapioca, arrowroot, canna, and low amylose (containing no more than about 10% by weight amylose, preferably no more than 5%) or high amylose (containing at least about 40% by weight amylose) varieties thereof. Also suitable are starches derived from a genetically modified starch crop. A preferred starch for use herein has an amylose content below 40%, including waxy corn starch with less than 1% amylose content. Particularly preferred starches include rice, wheat, tapioca, corn, and potato starches, in particular popcorn (maize) starch.

The starch may be chemically modified, be modified by heat treatment or by physical treatment. The term "chemically modified" or "chemical modification" includes, but is not limited to, crosslinked starches, starches modified with blocking groups to inhibit retrogradation, starches modified by the addition of lipophilic groups, acetylated starches, hydroxyethylated and hydroxypropylated starches, inorganically esterified starches, cationic, anionic and oxidized starches, zwitterionic starches, starches modified by enzymes, and combinations thereof.

One modification process is the pregelatinization of starch, which is the collapse or disruption of molecular orders within starch granules, manifested in irreversible changes in properties such as granular swelling (penetration of water, which results in an increased randomness in the granular structure), native crystallite melting (decrease of crystalline regions of the starch granules due to the penetration of water), loss of birefringence, and starch solubilization. Such pregelatinized starches are substantially soluble (swelling) in cold water without cooking and develop viscosity immediately (instant starches), in contrast to native starches. Pregelatinized starches are typically prepared by thermal, chemical, or mechanical processes. The particular process employed strongly affects the physical properties of the pregelatinized starches, in particular wettability, dispersibility and peak viscosity in cold water. Thermal processes are widely used as heat causes the conversion of crystalline regions into amorphous region, thereby promoting the penetration of water and swelling of the granules. Typical thermal processes to effect gelatinization include spray-drying, roll-drying or drum-drying, extrusion, and other heating/drying processes. Depending on the method used and the specific process parameters employed, the produced pregelatinized starches may have lost or maintained their granular structure. The non-granular pregelatinized starches, typically prepared by roll-drying, drum-drying, extrusion and, in some cases, spray-drying, are widely used in various technical fields (see, e.g., U.S. patents Nos. 3,607,394 and 5,131,953). For some applications, however, granular pregelatinized starches are preferentially used because the intact granular structure imparts certain properties, such as improved texture. These granular pregelatinized starches may be prepared by, for example, specific spray-drying processes, which cause swelling and pregelatinization while preventing destruction of the granule shape, or heating in aqueous organic solvents, such as alcohol-water mixtures, followed by drying (see, e.g., U.S. patents Nos. 4,465,702 and 5,037,929).

Pregelatinized starches are widely used in various technical fields to alter the viscosity or texture of a given product without requiring heating. For this reason, for example, numerous food products contain pregelatinized starches. Another important field of application is the pharmaceutical industry, where pregelatinized starches are traditionally used as a binder, filler or disintegrant, and to enhance drug stability and control release rates in modified-delivery dosage forms.

One preferred pregelatinized starch is a pregelatinized, non-granular starch material consisting of flake-shaped starch particles as described in co-pending PCT patent application No. PCT/EP2009/00160 with a filing date of February 18, 2009, entitled "pregelatinized starches as carrier material for liquid", he content of which is incorporated herein by reference.

Another starch carrier suitable in the present invention is a puffed starch containing powder, which is obtained from a puffed starch containing material wherein "puffed" refers to the well-known definition of puffing which indicates a swelling through a release of vapour in a puff. A puffed starch containing material is a swollen and/or burst kernel, which is containing starch in an amount of more than 30%, preferably more than 50% (between 60 and 70% for popcorn). One preferred puffed starch containing powder is described in co-pending European patent application No 08018426.0, filed on October 22, 2008, entitled "puffed starch material", the content of which is incorporated herein by reference.

In a highly preferred embodiment, the starch carrier is a porous starch. The term "porous starch" as used herein means starch or starch granules having been modified by a substrate, preferably an enzyme, resulting in the structural lattice of the granule having holes, pores or openings which allow smaller molecules to enter the interstices of the starch granules. The starch granules suitable for modification and for use in the present invention may comprise any starch which is capable of being modified to increase pore volume or surface area, for example, corn or potato starch. An example of porous starch granules suitable for use in the present invention are starch granules modified by treatment, usually by amylase enzymes, to increase the pore volume and thereby producing a microporous starch matrix. Any of a wide variety of art-recognized alpha-amylase or glucoamylases including those derived from Rhizopus niveus, Asperigillus niger, and Rhizopus oryzae and Bacillus subtilis and alpha-amylases and glucoamylases of animal origin, can be used. Microporous starch granules prepared by the action of acid or amylase on granular starch are well known in the literature, see for example, Starch Chemistry and Technology, Whistler, Roy L., 2nd Edition, (1984), Academic Press, Inc. New York, N.Y. These methods and others, as well as those disclosed herein, are suitable for preparing a partially hydrolyzed porous starch matrix. The duration of enzyme treatment necessary to produce microporous starch matrices suitable for use in accordance with this invention depends on a number of variables, including the source of starch, species and concentration of amylases, treatment temperature, and pH of the starch slurry. The progress of starch hydrolysis can be followed by monitoring the D-glucose content of the reaction slurry.

Cyclodextrins are however excluded from the present invention. They are expensive in manufacturing and use.

Preferably, the starch carrier has an average particle size of from 0.5 micrometers to 400 micrometers. More preferably the starch carrier has an average particle size of from 1 micrometers to 200 micrometers, even more preferably from 2 micrometers to 100 micrometers. Most preferably, the starch carrier has an average particle size of from 10 micrometers to 50 micrometers, especially if a porous starch is used as a carrier.

### First flavouring agent

The first flavouring agent according to the present invention is a flavouring agent which is non-liquid at room temperature, i.e. at a temperature of 20°C to 25°C. Examples of such a flavouring agent include, but are not limited thereto, vanilla flavour (vanillin, CAS 121-33-5), raspberry flavour (raspberry ketone, CAS 5471-51-2), strawberry flavour (strawberry furanone CAS 3658-77-3), cooked sugar flavour (maltol, CAS 118-71-8), cheese or jasmin flavor (indol, CAS 120-72-9) and nut flavour (methyl cyclopentenolone, CAS 80-71-7). Other suitable flavouring agents are sweeteners including, but not limited thereto, high intensity sweeteners, dipeptide sweeteners (e.g. aspartame, acesulfame salts, cyclamates, steviosides), sucralose , saccharin or saccharin salts , natural sweeteners (e.g. sugar, glucose, fructose), polyols (e.g. maltitol, sorbitol, lactitol, xylitol, erythritol, isomalt and mannitol), or combinations thereof.

The first flavouring agent may be a single flavouring agent, or a blend of 2 or more flavouring agents.

Preferably, said first flavouring agent is present in said starch carrier at a level of from 10% to 40%, preferably from 15% to 40%, even more preferably from 20% to 35%, by weight of said starch carrier.

### Plasticizer

The plasticizer according to the present invention is a plasticizer which is liquid at room temperature, i.e. at a temperature of 20°C to 25°C. The plasticizer is to be selected such that it does not dissolve the starch carrier. Examples of suitable plasticizers include, but are not limited to, mono-, di and triglycerides, oils (e.g. omega 3, sunflower oil) and oil extracts (e.g. anise oil, mint oil, clove oil, citrus oil), natural hydrogenated oils and fats, water, glycerol, ethanol, diacetin, triacetin, propylene glycol, isopropyl alcohol, triethylcitrate, benzylalcohol, sorbitan esters, myglyol, or combinations thereof.

When the plasticizer is blended with the first flavouring agent, the plasticizer softens or even partially dissolves the first flavouring agent. This makes it possible to encapsulate the first flavouring agent to be encapsulated within the starch carrier.
Preferably, the plasticizer is present in said starch carrier at a level of from 2% to 20%, preferably 3% to 12%, by weight of said starch carrier.

In one embodiment, the plasticizer comprises a second flavouring agent which is liquid at a temperature from 20°C to 25°C, or a blend of flavouring agents which are liquid at a temperature from 20°C to 25°C. In another embodiment, the plasticizer consists of a second flavouring agent which is liquid at a temperature from 20°C to 25°C, or of a blend of flavouring agents which are liquid at a temperature from 20°C to 25°C. Preferably said second flavouring agent comprises an essential oil, or consists of an essential oil. Preferably said blend of flavouring agents comprises at least one essential oil or a mixture of essential oils. Essential oils suitable in the present invention include, but are not limited to, all citrus oils (e.g. lemon, orange, mandarine, grapefruit), peppermint oil, clove oil, geraniol palmarosa essential oil, etc.

### Encapsulated blend

The controlled delivery system according to the present invention comprises a blend of the first flavouring agent and the plasticizer. Preferably, the ratio of first flavouring agent to plasticizer is from 20:1 to 3:1, more preferably from 20:1 to 4:1 and even more preferably from 20:1 to 5:1.

The encapsulated blend comprises at least 40% by weight of said blend of a portion which is solid or semi-solid, said portion having a melting point or a glass transition temperature of from 25°C to 250°C.
For convenience and ease of reading, said "portion which is solid or semi-solid" will now be referred to hereinafter as a "(semi-)solid portion".
Said portion, and its melting temperature or glass transition temperature can be measured using Differential Scanning Calorimetry, the method of which is specified hereinafter. Preferably, the blend comprises at least 50%, more preferably at least 60%, even more preferably at least 70%, even more preferably at least 80% and most preferably at least 90% by weight of said blend, of a (semi-)solid portion.
In one preferred embodiment, the melting point or the glass transition temperature of the (semi-)solid portion is from 25°C to 65°C, more preferably from 25°C to 55°C, more preferably from 25°C to 45°C, and even more preferably from 25°C to 40°C. In another preferred embodiment, the melting point or the glass transition temperature of the (semi-)solid portion is from 100°C to 250°C, more preferably from 125°C to 250°C.
The melting temperature or the glass transition temperature is important because the flavour release is enhanced upon melting.
When e.g. a food product comprising the controlled delivery system according to the present invention is consumed, the melting point or the glass transition temperature of the (semi-) solid portion should ideally be around the human body temperature. As such, the flavour is released at the time of consumption.
When the preparation of a product containing the flavour delivery system according to the present invention involves a heat treatment, e.g. cooking of food or baking biscuits, the heat treatment may enhance the flavour release, thereby improving the overall taste of the prepared product.

The (semi-)solid portion, as used herein, could be crystalline, amorphous, pasty or waxy, as long as it meets the melting temperature or the glass transition temperature requirement specified hereinbefore.

The amount of first flavouring agent and plasticizer present in the (semi-)solid portion will depend on the actual agent/plasticizer used, but preferably said (semi-)solid portion comprises at least 40%, more preferably at least 50%, even more preferably at least 70% and most preferably at least 90% of the first flavouring agent.
The remaining part of the first flavouring agent and plasticizer which is not part of the (semi-) solid portion, is typically present in a liquid portion. Preferably, the encapsulated blend comprises no more than 40% of a liquid portion. Preferably, said liquid portion has a freezing point of 25°C or below, more preferably a freezing point of 20°C or below.

The combination of the (semi-)solid portion and the liquid portion provides a dual-release mechanism of the flavour. The flavour from the liquid portion will be released almost immediately upon consumption or use, while the flavour from the (semi-)solid portion will be more gradually released. In the event that a second flavouring agent or essential oil is used as plasticizer, an even higher flavour intensity may be achieved. Even special flavour combinations may be created, or synergistic effects be obtained. For example, menthol crystals may be used in combination with peppermint oil which results in a better freshness with higher intensity and/or longevity.

In one preferred embodiment, the ratio of (semi-)solid portion to liquid portion is higher than 1. Preferably, the ratio of (semi-)solid portion to liquid portion is from 1:1 to 20:1, more preferably from 3:1 to 20:1, even more preferably from 5:1 to 20:1, and most preferably from 10:1 to 20:1.

### Method of making the flavour delivery system

According to a further aspect, the present invention relates to a method of making a particulate flavour delivery system, the method comprising the steps of:
a. making a blend by mixing a first flavouring agent which is non-liquid at 20°C to 25°C and a plasticizer at a temperature from 25°C to 65°C; and
b. mixing said blend with a starch carrier

The blending of the plasticizer and the first flavouring agent may be performed by simply mixing them in a vessel at room temperature. Depending on the flavouring agent used, and its melting point, it may be beneficial to apply some moderate heating during mixing. For example, the mixing temperature may be from 25°C to 65°C, preferably from 40°C to 55°C. In any event, the temperature may not be too high to avoid the destruction or denaturing of the flavouring agent's properties.

This blend may then be mixed, preferably gradually mixed with the starch carrier to load said blend into said starch carrier. For loading the starch carrier with the blend, the starch carrier may be placed in a vessel supporting mechanical mixing and preferable capable of being sealed. Suitable mixing devices are, for example, a paddle mixer, a ribbon blender, a V-blender, or a plough blade mixer. The blend is then supplied, for example poured, pumped or, preferably, sprayed via a nozzle, into the vessel and applied onto the agitated starch carrier material. Spraying via a nozzle is advantageously used because the nozzle leads to the formation of small droplets that are more easily absorbed by the starch carrier material. The mixing is continued until an even distribution of the blend into the solid carrier is obtained. The time required for spraying or pumping is dependent upon the addition level of the blend onto the starch carrier material and the time required in order to ensure complete absorption to form a free flowing powder.
Another suitable method for loading the blend into the starch carrier material may be a fluidized-bed loading process. In such a process, the starch carrier is fluidized by forcing air or another gas upward through a bed of starch particles. The blend is then sprayed via a nozzle onto the fluidized starch particles to yield a blend-loaded starch material of evenly loaded starch particles.
A further suitable loading method for use herein comprises the steps of suspending the starch carrier material in the blend, followed by separating the blend-loaded starch carrier material from the remaining, non-encapsulated blend by conventional separation methods, such as filtration or centrifugation.
Depending on the type of blend to be loaded, the blend may be heated or cooled. In case of high viscous blends, for example, it might be favourable to heat the liquid components to decrease the viscosity and facilitate the loading process. In case of temperature-sensitive blends, cooling might be desired or required. In any event, the heating or cooling may not negatively affect the flavour properties of the blend. Means for effecting cooling or heating, such as a cooled or heated blender, are well-known to a person skilled in the art.
Optionally, the starch carrier material may be pre-treated before loading with an inert gas to remove, for instance, oxygen. It can also be vacuum-treated before loading to increase the absorption capacity. Further, when sensitive blends are to be loaded, the loading operation might be carried out under an inert gas atmosphere, for example under a nitrogen atmosphere to protect against loss of quality by oxidation.

After having loaded the starch carrier material with the blend, further processing steps may optionally follow. For example, flowing or anti-caking agents may be added to the blend-loaded starch carrier material, such as tricalcium phosphate, silica, silicates, carbonates and/or stearates, to increase flowability. The blend-loaded starch carrier material of the present invention may also be provided with a coat and/or further encapsulated by any suitable encapsulating or coating materials, such as maltodextrins, starches, modified starches, dextrins, oils, fats, waxes, hydrocolloids, proteins, emulsifiers as known in the art, or any polymeric wall material known in the art to provide a delayed or sustained release, like polyolefins, or vinyl polymers like polyvinylacetate.

Optionally, also a drying and/or sieving step may be performed.

After the starch carrier is loaded with the blend, a portion of the blend recrystallizes and/or solidifies into a (semi-)solid portion as herein described. The recrystallisation may further be enhanced by leaving the flavour delivery system at room temperature for a period of time, preferably from 1 hour to 24 hours, more preferably from 1 hour to 12 hours. Alternatively, a cooling step may be performed to enhance and/or speed up the recrystallisation process.

### Use

The particulate flavour delivery system according to the present invention can be used in a number of fields, such as but not limited to, in food and foodstuff products, feed, chewing gum, personal care products, pharmaceutical products or tablets.
Examples of food and foodstuff products are beverages, processed meats, frozen desserts including ice-cream, confectionary products including candy, savoury products, dairy-type products, sauce compositions, dressing compositions, syrups, cereal grain product, or functional ingredients for the preparation of food. The food products provided herein are for illustrative purposes only and are not meant to be an exhaustive list.
As used herein, the term bakery products is intended to mean any product produced and/or sold by a bakery and includes in particular bread, breadcrumbs made from these breads and bread products, pies, pastries, cakes, biscuits, cookies, etc.
As used herein, the term personal care product is intended to mean any product used for the care of a human being which typically involves the use of flavours. Examples of such personal care products include, but are not limited thereto, toothpaste or mouthwash.
As used herein, the term pharmaceutical product includes a compound or a mixture of compounds that are pharmaceutically relevant. The pharmaceutical product may be the end product that is being used. Alternatively, the pharmaceutical product may be an intermediate product formed while making a pharmaceutical compound.

One preferred embodiment is a chewing gum comprising the particulate flavour delivery system according to the present invention. Preferably, the first flavouring agent comprises menthol and the plastisizer comprises peppermint oil. Preferably, the particulate flavour delivery system is present at a level of from 0.5% to 5%, more preferably from 1% to 4% by weight of said chewing gum. Preferably, the particulate flavour delivery system according to the present invention is incorporated in the gum base.

Another preferred embodiment is a bakery product comprising the particulate flavour delivery system according to the present invention. Preferably, the particulate flavour delivery system is present at a level from 0.05% to 5%, more preferably from 0.05% to 1%, even more preferably from 0.1 % to 0.5% by weight of said bakery product.

Yet another preferred embodiment is a tablet, preferably a compressed tablet, comprising the particulate flavour delivery system according to the present invention. Pharmaceutical tablets often have a bad taste. To improve the taste, typically flavours (often citrus flavours) are added to the tablet. The taste profile of such tablets can be further enhanced by incorporating the flavour delivery system according to the present invention. Preferably, the particulate flavour delivery system is present at a level from 0.5% to 5%, more preferably from 1% to 2% by weight of said tablet. Surprisingly it has been found that compressed tablets comprising the flavour delivery system according to the present invention often have a higher hardness than if only the flavour itself was added to the tablet.
Optionally, the tablet may further comprise an effervescent agent. Suitable effervescent agents include sodium bicarbonate, potassium bicarbonate, potassium carbonate, sodium sesquicarbonate, sodium glycine carbonate, L-lystine carbonate, arginine carbonate, amorphous calcium carbonate, calium carbonate, or mixtures thereof. Such effervescent agents typically have a negative effect on the flavour, resulting in a bad taste. By using the flavour delivery system according to the present invention, such off-taste is not observed.

### Test methods: Differential Scanning Calorimetry (DSC)

Sample preparation: a sample of the flavour delivery system according to the present invention is first allowed to equilibrate for 3 days under room conditions prior to measurement. About 10 mg of a sample is then placed in a high pressure stainless steel crucible to avoid any evaporation over time.

Equipment used: The melting profile of the product is determined using a Differential Scanning Calorimeter (DSC Q100) from TA Instruments. Calibration of the equipment is performed using cyclohexane and indium. The calculation of the temperatures and enthalpies is done using TA Universal Analysis, the software delivered by the equipment manufacturer.

The measurement of melting temperature or glass transition temperature with DSC is well known in the art. DSC defines the glass transition as a change in the heat capacity as a compound goes from the glass state to the rubber state. This is a second order endothermic transition (requires heat to go through the transition) so in the DSC the transition appears as a step transition and not a peak such as might be seen with a melting transition.

### Applied temperature profile:

- Quenching to -80°C
- Isothermal for 3 minutes
- Heating at 5°C per minute to 80°C

### Results:

The melting profile of the flavour blend is analysed, resulting in a total enthalpy (Joule/g blend). Two fractions can be noticed: one melting below 25°C (referred to as the liquid portion) and one melting above 25°C (referred to as solid portion). By partial integration of the liquid portion and the solid portion, the respective enthalpies can be calculated. From these enthalpies, the weight ratio of both portions can be calculated.

### Examples

### Example 1: chewing gum

A particulate flavour delivery system according to the present invention is prepared using menthol as first flavouring agent and mint oil as plasticizer. The ingredients and their levels are listed in Table 1.

A blend is prepared by mixing menthol and mint oil at 40°C. This blend is gradually mixed with a porous corn starch in a blender. During mixing, the temperature is maintained at 40-45°C. After mixing, the mixture is maintained at 40°C during a period of 30 minutes. Silica is added to the mixture. Then the mixture is sieved on a 10 mm sieve, and left for a period of 12 hours.

The porous corn starch used in this example was prepared by dispersing corn starch in a citrate buffer of pH 4.6 at a 20% concentration of starch dry solids. The slurry was reacted with an amyloglucosidase A 3042 from Sigma. The enzyme dosage was 0.1 wt% by weight of starch and the reaction was allowed to run at 55°C, a pH of 4.6 and for 24 hours. The reaction was stopped by inactivation of the enzyme by holding the slurry for 10 minutes at a pH below 2. After pH adjustment to 5.5, the starch was filtered or centrifuged and the cake was washed and dried.

**Table 1**

| Ingredients | Weight percent (%) |
|---|---|
| Porous corn starch | 71% |
| Menthol crystals | 24% |
| Mint oil | 3% |
| Silica | 2% |
| Total | 100% |

The encapsulated blend thus contains 88.9% of menthol versus 11.1% of mint oil (by weight of the flavour delivery system).
The particle size of the flavour delivery system is determined to be within the range of 10 micrometers to 40 micrometers.
DSC analysis is performed on the flavour delivery system, and reveals 94.8 wt% of a solid portion and 5.2 wt% of a liquid portion. The solid portion has a melting point of 37,85°C, while the liquid portion has a freezing point of 14°C.

A chewing gum is prepared by mixing the ingredients listed in table 2. The particulate flavour delivery system according to the present invention is first incorporated in the gum base.

**Table 2**

| Ingredients | Gram [g/Kg] | Weight Percent [%] |
|---|---|---|
| Gum base* | 325 | 32.50 % |
| Sorbitol Powder | 495 | 49.50 % |
| Maltitol Syrup (75 % solids) | 60 | 6.00 % |
| Mannitol Powder | 50 | 5.00 % |
| Glycerine | 30 | 3.00 % |
| Flavour delivery system | 40 | 4.00 % |
| TOTAL | 1000 | 100.00 % |

| | | |
|---|---|---|
| *Solsona-T™ from Cafosa | | |

### Example 2: Comparative study

A comparative study is performed of the flavour release of the menthol after chewing from the flavour delivery system as described above, versus a spray-dried delivery system containing the same amount of menthol. GC/MS reveals a higher immediate release of menthol after 1 minute in the spray-dried system. After 5 minutes, only 74% of the menthol is still present in the chewing gum, versus 85% in the flavour delivery system of the present invention. After 8 minutes, the percentages are respectively 68% versus 75%. After 9 minutes, the values are respectively 60% versus 67.5%.

## Claims

1. A particulate flavour delivery system comprising a starch carrier and a blend of a first flavouring agent and a plasticizer, said first flavouring agent being non-liquid at a temperature of 20°C to 25°C, and said plasticizer being liquid at a temperature of 20°C to 25°C, said blend being encapsulated in said starch carrier, **characterized in that** said encapsulated blend comprises at least 40% by weight of said blend of a portion which is solid or semi-solid, said solid or semi-solid portion having a melting point or a glass transition temperature of from 25°C to 250°C.

2. A particulate flavour delivery system according to claim 1, wherein said solid or semi-solid portion has a melting point or a glass transition temperature of from 25°C to 65°C.

3. A particulate flavour delivery system according to claims 1-2, wherein said encapsulated blend comprises less than 40% by weight of said blend of a liquid portion having a freezing point of 20°C or below.

4. A particulate flavour delivery system according to claims 1-3, wherein the ratio of the solid or semi-solid portion to said liquid portion is higher than 1, preferably said ratio is from 20:1 to 3:1.

5. A particulate flavour delivery system according to claims 1-4, wherein said first flavouring agent is present at a level of from 10% to 40% by weight of said starch carrier.

6. A particulate flavour delivery system according to claims 1-5, wherein said plasticizer comprises a second flavouring agent which is liquid at a temperature from 20°C to 25°C.

7. A particulate flavour delivery system according to claim 6, wherein said second flavouring agent comprises an essential oil.

8. A particulate flavour delivery system according to claims 1-7, wherein said starch carrier has an average particle size of from 0.5 micrometers to 400 micrometers.

9. A particulate flavour delivery system according to claims 1-8, wherein said starch carrier is a porous starch.

10. A method of making a particulate flavour delivery system according to any of claims 1 to 9, comprising the steps of:
a. making a blend by mixing a first flavouring agent which is non-liquid at 20°C to 25°C and a plasticizer at a temperature from 25°C to 65°C; and
b. mixing said blend with a starch carrier

11. Use of a particulate flavour delivery system according to claims 1-9 in food and foodstuff products including bakery products, feed, chewing gum, personal care products, pharmaceutical products or tablets.

12. A chewing gum comprising a particulate flavour delivery system according to claims 1-9, wherein said first flavouring agent comprises menthol and wherein said plasticizer comprises mint oil.

13. A chewing gum according to claim 12, wherein said particulate flavour delivery system is present at a level of from 0.5% to 5% by weight of said chewing gum.

14. A bakery product comprising a particulate flavour delivery system according to claims 1-9, wherein said particulate flavour delivery system is present at a level from 0.05% to 5% by weight of said bakery product.

15. A tablet comprising a particulate flavour delivery system according to claims 1-9, wherein said particulate flavour delivery system is present at a level from 0.5% to 5% by weight of said tablet, and wherein said tablet optionally comprises an effervescent agent.

## Patentansprüche

1. Partikuläres Aromatisierungssystem, das einen Stärketräger und eine Mischung eines ersten Aromastoffs und eines Weichmachers umfasst, wobei der erste Aromastoff bei einer Temperatur von 20°C bis 25°C nicht flüssig ist und der Weichmacher bei einer Temperatur von 20°C bis 25°C flüssig ist, wobei die Mischung im Stärketräger eingekapselt ist, **dadurch gekennzeichnet, dass** die eingekapselte Mischung mindestens 40 Gew.-% der Mischung eines festen oder halbfesten Anteils umfasst, wobei der feste oder halbfeste Anteil einen Schmelzpunkt oder eine Glasübergangstemperatur von 25°C bis 250°C aufweist.

2. Partikuläres Aromatisierungssystem nach Anspruch 1, wobei der feste oder halbfeste Anteil einen Schmelzpunkt oder eine Glasübergangstemperatur von 25°C bis 65°C aufweist.

3. Partikuläres Aromatisierungssystem nach den Ansprüchen 1-2, wobei die eingekapselte Mischung weniger als 40 Gew.-% der Mischung eines flüssigen Anteils mit einem Gefrierpunkt von 20°C oder darunter umfasst.

4. Partikuläres Aromatisierungssystem nach den Ansprüchen 1-3, wobei das Verhältnis des festen oder halbfesten Anteils zum flüssigen Anteil höher als 1 ist, wobei das Verhältnis vorzugsweise 20:1 bis 3:1 beträgt.

5. Partikuläres Aromatisierungssystem nach den Ansprüchen 1-4, wobei der erste Aromastoff in einer Menge von 10 bis 40 Gew.-% des Stärketrägers vorhanden ist.

6. Partikuläres Aromatisierungssystem nach den Ansprüchen 1-5, wobei der Weichmacher einen zweiten Aromastoff umfasst, der bei einer Temperatur von 20°C bis 25°C flüssig ist.

7. Partikuläres Aromatisierungssystem nach Anspruch 6, wobei der zweite Aromastoff ein ätherisches Öl umfasst.

8. Partikuläres Aromatisierungssystem nach den Ansprüchen 1-7, wobei der Stärketräger eine mittlere Korngröße von 0,5 Mikrometer bis 400 Mikrometer aufweist.

9. Partikuläres Aromatisierungssystem nach den Ansprüchen 1-8, wobei der Stärketräger eine poröse Stärke ist.

10. Verfahren zur Herstellung eines partikulären Aromatisierungssystems nach einem der Ansprüche 1 bis 9, das folgende Schritte umfasst:
a. Herstellen einer Mischung durch Vermischen eines ersten Aromastoffs, der bei 20°C bis 25°C nicht flüssig ist, und eines Weichmachers bei einer Temperatur von 25°C bis 65°C; und
b. Vermischen der Mischung mit einem Stärketräger.

11. Verwendung eines partikulären Aromatisierungssystems nach den Ansprüchen 1-9 in Lebensmitteln und Lebensmittelerzeugnissen einschließlich Backwaren, Futtermittel, Kaugummi, Körperpflegeprodukte, pharmazeutische Produkte oder Tabletten.

12. Kaugummi, der ein partikuläres Aromatisierungssystem nach den Ansprüchen 1-9 umfasst, wobei der erste Aromastoff Menthol umfasst und wobei der Weichmacher Minzöl umfasst.

13. Kaugummi nach Anspruch 12, wobei das partikuläre Aromatisierungssystem in einer Menge von 0,5 bis 5 Gew.-% des Kaugummis vorhanden ist.

14. Backware, die ein partikuläres Aromatisierungssystem nach den Ansprüchen 1-9 umfasst, wobei das partikuläre Aromatisierungssystem in einer Menge von 0,05 bis 5 Gew.-% der Backware vorhanden ist.

15. Tablette, die ein partikuläres Aromatisierungssystem nach den Ansprüchen 1-9 umfasst, wobei das partikuläre Aromatisierungssystem in einer Menge von 0,5 bis 5 Gew.% der Tablette vorhanden ist und wobei die Tablette optional ein Sprudelmittel umfasst.

## Revendications

1. Système de délivrance d'un arôme particulaire, comprenant un véhicule d'amidon et un mélange d'un premier agent aromatisant et d'un plastifiant, ledit premier agent aromatisant n'était pas liquide à une température de 20 °C à 25 °C, et ledit plastifiant étant liquide à une température de 20 °C à 25 °C, ledit mélange étant encapsulé dans ledit véhicule d'amidon, **caractérisé en ce que** ledit mélange encapsulé comprend au moins 40 % en poids dudit mélange d'une portion qui est solide ou semi-solide, ladite portion solide ou semi-solide ayant un point de fusion ou une température de transition vitreuse de 25 °C à 250 °C.

2. Système de délivrance d'un arôme particulaire selon la revendication 1, dans lequel ladite portion solide ou semi-solide a un point de fusion ou une température de transition vitreuse de 25 °C à 65 °C.

3. Système de délivrance d'un arôme particulaire selon les revendications 1 et 2, dans lequel ledit mélange encapsulé comprend moins de 40 % en poids dudit mélange d'une portion liquide ayant un point de congélation de 20 °C ou en dessous.

4. Système de délivrance d'un arôme particulaire selon les revendications 1 à 3, dans lequel le rapport de la portion solide ou semi-solide à ladite portion liquide est supérieur à 1, de préférence ledit rapport est de 20:1 à 3:1.

5. Système de délivrance d'un arôme particulaire selon les revendications 1 à 4, dans lequel ledit premier agent d'aromatisation est présent à un niveau de 10 % à 40 % en poids dudit véhicule d'amidon.

6. Système de délivrance d'un arôme particulaire selon les revendications 1 à 5, dans lequel ledit plastifiant comprend un second agent d'aromatisation qui est liquide à une température de 20 °C à 25 °C.

7. Système de délivrance d'un arôme particulaire selon la revendication 6, dans lequel ledit second agent d'aromatisation comprend une huile essentielle.

8. Système de délivrance d'un arôme particulaire selon les revendications 1 à 7, dans lequel ledit véhicule d'amidon a une taille particulaire moyenne de 0,5 micromètre à 400 micromètres.

9. Système de délivrance d'un arôme particulaire selon les revendications 1 à 8, dans lequel ledit véhicule d'amidon est un amidon poreux.

10. Procédé de fabrication d'un système de délivrance d'un arôme particulaire selon l'une quelconque des revendications 1 à 9, comprenant les étapes consistant à :
a. élaborer un mélange en mélangeant un premier agent d'aromatisation qui est non liquide à une température de 20 °C à 25 °C et un plastifiant liquide à une température de 25 °C à 65 °C ; et
b. mélanger ledit mélange avec un véhicule d'amidon.

11. Utilisation d'un système de délivrance d'un arôme particulaire selon les revendications 1 à 9 dans des aliments et des produits alimentaires comprenant des produits de boulangerie, des aliments, de la pâte à mâcher, des produits de soins personnels, des produits pharmaceutiques ou des comprimés.

12. Pâte à mâcher comprenant un système de délivrance d'un arôme particulaire selon les revendications 1 à 9, dans laquelle ledit premier agent d'aromatisation comprend du menthol et dans laquelle ledit plastifiant comprend de l'essence de menthe.

13. Chewing-gum selon la revendication 12, dans lequel ledit système de délivrance d'un arôme particulaire est présent à un niveau de 0,5 % à 5 % de ladite pâte à mâcher.

14. Produit de boulangerie comprenant un système de délivrance d'un arôme particulaire selon les revendications 1 à 9, dans lequel ledit système de délivrance d'un arôme particulaire est présent à un niveau de 0,05 % à 5 % en poids dudit produit de boulangerie.

15. Comprimé comprenant un système de délivrance d'un arôme particulaire selon les revendications 1 à 9, dans lequel ledit système de délivrance d'un arôme particulaire est présent à un niveau de 0,5 % à 5 % en poids dudit comprimé, et dans lequel ledit comprimé comprend éventuellement un agent effervescent.
